# EUROPÄISCHE PATENTSCHRIFT

(11) **EP 3 105 769 B1**
(45) Veröffentlichungstag und Bekanntmachung des Hinweises auf die Patenterteilung: **26.09.2018**
(21) Anmeldenummer: 14819034.1
(22) Anmeldetag: 24.12.2014
(51) Int. Cl.: H01H 33/56, F16C 29/02, F16C 33/04

(54) **ELEKTRISCHES HOCHSPANNUNGSSCHALTGERÄT**
HIGH-VOLTAGE SWITCHING DEVICE
APPAREIL ÉLECTRIQUE DE COUPURE SOUS HAUTE TENSION

(30) Priorität: 12.02.2014 DE 102014202524
(43) Veröffentlichungstag der Anmeldung: 21.12.2016
(73) Patentinhaber: General Electric Technology GmbH, 5400 Baden (CH)
(72) Erfinder: BOEHM, Gerrit, 34225 Baunatal (DE)
(74) Vertreter: DREISS Patentanwälte PartG mbB
(86) Internationale Anmeldenummer: PCT/EP2014/079309
(87) Internationale Veröffentlichungsnummer: WO 2015/120947

(56) Entgegenhaltungen:
- EP-A1- 0 016 880
- DE-A1- 3 141 181
- DE-B- 1 629 774
- DE-C1- 19 524 636
- US-A- 2 762 118

## Beschreibung

Die Erfindung betrifft ein elektrisches Hochspannungsschaltgerät mit einer etwa in Längsrichtung verschiebbaren Stange, die eine Umfangsnut aufweist, in der ein Gleitring vorhanden ist.

Aus der DE 195 24 636 C1 ist ein dreiphasiger Hochspannungsschalter bekannt, bei dem jede der Phasen eine Unterbrechereinheit aufweist, die jeweils aus einem feststehenden Kontaktstift und einem in Längsrichtung beweglichen sogenannten Tulpenkontakt aufgebaut ist. Der Tulpenkontakt ist mit einer Betätigungsstange fest verbunden, die in ihrer Längsrichtung hin und her verschiebbar ist. Die Betätigungsstange ist mit einem Gleit- und Führungsring versehen, der eine Lagerung der Betätigungsstange ermöglicht.

Häufig ist die Betätigungsstange mit einer umlaufenden Nut versehen, in die der Gleit- und Führungsring dann bei der Herstellung der Unterbrechereinheit eingebracht werden muss. Weiterhin besteht der Gleit- und Führungsring häufig aus einem Kunststoff, dessen mechanische Eigenschaften ein Dehnen, wie dies bei einem Gummiring üblicherweise möglich ist, nicht zulassen. In diesem Fall kann der Gleit- und Führungsring nicht ohne weiteres über die Betätigungsstange geschoben und damit nicht in die Nut eingebracht werden.

Stattdessen wird in diesem Fall der Gleit- und Führungsring häufig als bandförmiges Material ausgebildet, das in der erforderlichen Länge abgeschnitten und dann bei der Herstellung der Unterbrechereinheit in die Nut eingelegt wird. Dieses Vorgehen bringt jedoch den Nachteil mit sich, dass bei dem in die Nut eingelegten Gleit- und Führungsring an den Enden des Bandmaterials ein Spalt übrig bleibt, was insbesondere dann problematisch ist, wenn der Gleit- und Führungsring zusätzlich auch dichtende Eigenschaften hinsichtlich eines Isoliergases aufweisen soll. Ein weiterer Nachteil besteht darin, dass der Gleit- und Führungsring nur lose in der Nut angeordnet ist und jederzeit auch wieder aus der Nut herausrutschen kann. Dies kann bei der Montage zu Abscherungen am Gleit- und Führungsring und damit zu dessen Beschädigung führen, was wiederum negative Auswirkungen auf die Betriebssicherheit des Schaltgeräts zur Folge haben kann.

Aus der DE 199 07 838 A1 geht ein Druckgasschalter hervor, der mit einer zwei Hebelarme und einen Umlenkhebel aufweisenden Übertragungsvorrichtung versehen ist. Einer der beiden Hebel ist über ein Kraftübertragungselement mit der Isolierstoffdüse gekoppelt. Das Kraftübertragungselement ist mit Hilfe eines Gleit- und Führungsrings in einem Kontakteinheitskörper gleitend geführt und der Kontakteinheitskörper ist mit Hilfe eines Gleit- und Führungsrings in einer Stromzuführung gleitend geführt. Die Gleit- und Führungsringe sind in Nuten eingelassen, was die vorstehend erläuterten Probleme mit sich bringt.

Aufgabe der Erfindung ist es, ein elektrisches Hochspannungsschaltgerät zu schaffen, das die vorstehenden Nachteile nicht mehr aufweist.

Die Erfindung löst diese Aufgabe durch ein elektrisches Hochspannungsschaltgerät nach dem Anspruch 1.

Erfindungsgemäß ist ein Hochspannungsschaltgerät mit einer etwa in Längsrichtung verschiebbaren Stange vorgesehen, die eine Umfangsnut aufweist, in der ein Gleitring vorhanden ist. Der Gleitring besteht aus einem Bandmaterial, das zwei Enden aufweist, wobei die beiden Enden ineinander greifen und einen Formschluss bilden.

Das erfindungsgemäße Hochspannungsschaltgerät hat den Vorteil, dass aufgrund der ineinandergreifenden Enden kein durchgehender Spalt entsteht. Weiterhin ist der Gleitring fest innerhalb der Umfangsnut angeordnet und kann nicht ohne weiteres wieder aus der Umfangsnut herausrutschen.

Bei einer Ausführungsform der Erfindung weist eines der beiden Enden einen Quersteg auf, der in eine zugehörige Ausnehmung des anderen Endes eingreift. Vorzugsweise weist die Ausnehmung dabei im Wesentlichen dieselben Abmessungen wie der Quersteg auf. Damit wird in besonders einfacher Weise ein besonders guter Formschluss erreicht.

Bei einer Weiterbildung ist der Quersteg über einen Längssteg mit dem Bandmaterial verbunden. Damit entsteht eine Ausgestaltung des Endes des Bandmaterials, das in einfacher Weise beispielsweise durch eine entsprechende schneidende Bearbeitung des Bandmaterials hergestellt werden kann.

Weitere Merkmale, Anwendungsmöglichkeiten und Vorteile der Erfindung ergeben sich aus der nachfolgenden Beschreibung von Ausführungsbeispielen der Erfindung, die in zugehörigen Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Figuren.

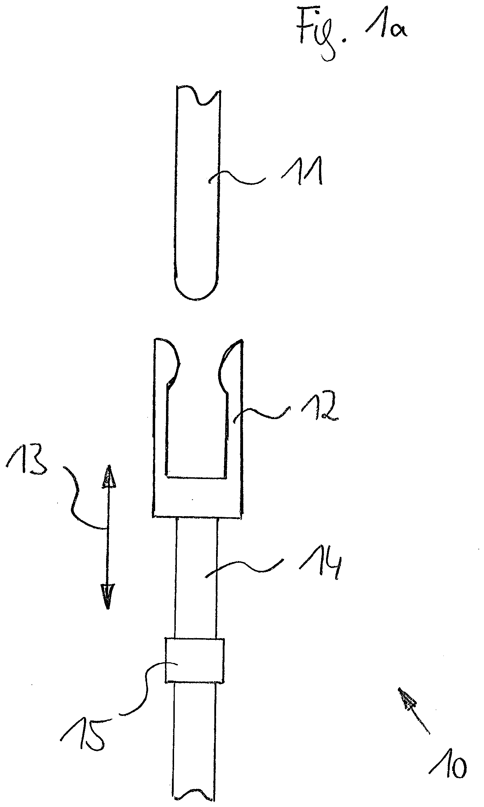

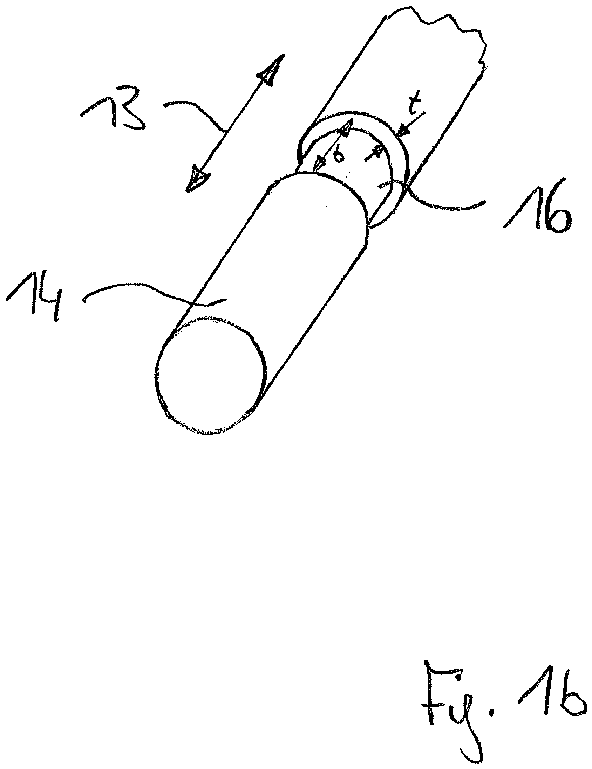

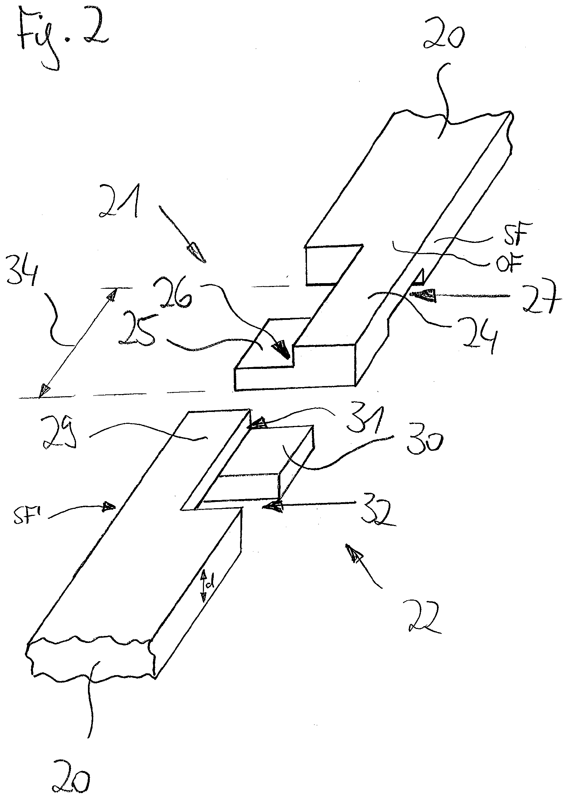

Figur 1a zeigt eine schematische Ansicht eines Teils einer Unterbrechereinheit eines elektrischen Hochspannungsleistungsschalters, Figur 1b zeigt eine Perspektivdarstellung einer Stange des Hochspannungsleistungsschalters der Figur 1a, und Figur 2 zeigt eine schematische Perspektivdarstellung der Enden eines Gleitrings für die Stange der Figur 1b.

Es wird darauf hingewiesen, dass die Erfindung nur beispielhaft im Zusammenhang mit einem Hochspannungsleistungsschalter beschrieben wird. Die Erfindung kann jedoch bei jeglichen bekannten Hochspannungsschaltgeräten zum Einsatz kommen, beispielsweise bei Leistungsschaltern in Freiluftausführung oder bei in Metallbehältern untergebrachten Leistungsschaltern oder bei gasisolierten Schaltanlagen oder dergleichen. Weiterhin wird darauf hingewiesen, dass die Erfindung nicht auf die erwähnte und nachfolgend erläuterte Stange beschränkt ist, sondern bei jeglichen, axial verschieblichen Bauteilen zum Einsatz kommen kann. Beispielhaft kann die Erfindung auch bei einer Stromzuführung oder bei einem Hauptstromkontakt oder bei einem Kontakteinheitskörper oder bei einem Kraftübertragungselement oder dergleichen zum Einsatz kommen.

In der Figur 1a ist ein Teil 10 einer Unterbrechereinheit eines elektrischen Hochspannungsleistungsschalters dargestellt. Die Unterbrechereinheit weist einen Schaltstift 11 und einen sogenannten Tulpenkontakt 12 auf, von denen zumindest der Tulpenkontakt 12 in Richtung des Pfeils 13 verschiebbar ausgebildet ist. Der Tulpenkontakt 12 ist mit einer Stange 14 verbunden, die in nicht-dargestellter Weise mit einer Betätigungseinrichtung gekoppelt ist, von der die Stange 14 im Wesentlichen in ihrer Längsrichtung hin und her verschoben werden kann. Die Stange 14 ist mit einem Gleitring 15 versehen, mit dem die Stange 14 in nicht-dargestellter Weise in einem Lagerteil verschieblich geführt ist.

Zur Fixierung des Gleitrings 15 ist es möglich, dass in der Stange 14 eine umlaufende Nut vorhanden ist, in der der Gleitring 15 eingebracht ist, und dass der Gleitring 15 sich an dem Lagerteil entlangbewegt. Alternativ ist es möglich, dass in dem Lagerteil eine umlaufende Nut vorhanden ist, in der der Gleitring 15 eingebracht ist, und dass der Gleitring 15 sich an der Stange 14 entlangbewegt. Nachfolgend wird beispielhaft nur der erstgenannte Fall näher beschrieben. Die nachfolgenden Erläuterungen gelten in entsprechender Weise aber auch für den zweitgenannten Fall.

In der Figur 1b ist die Stange 14 der Figur 1a dargestellt, die in Richtung des Pfeils 13 und damit in ihrer Längsrichtung verschiebbar ist. Es wird darauf hingewiesen, dass die Stange 14 der Figur 1a nur beispielhaften Charakter hat, und dass anstelle der Stange 14 der Figur 1a auch jegliche andere Stange innerhalb des Hochspannungsleistungsschalters herangezogen werden kann, die in ihrer Längsrichtung verschieblich ausgebildet ist.

Die Stange 14 der Figur 1b weist an ihrer Umfangsfläche eine umlaufende Umfangsnut 16 auf. Die Umfangsnut 16 besitzt eine Breite b und eine Tiefe t, die in Umfangsrichtung im Wesentlichen konstant sind. In die Umfangsnut 16 der Figur 1b wird bei der Herstellung des Hochspannungsleistungsschalters der Gleitring 15 eingebracht. Daraus ergibt sich dann die Stange 14 mit dem eingelegten Gleitring 15 gemäß der Figur 1a.

Der Gleitring 15 besteht aus einem Bandmaterial 20. Dies bedeutet, dass der Gleitring 15 keinen durchgehend geschlossenen Ring darstellt, sondern dass der Gleitring 15 von dem Bandmaterial 20 abgeschnitten wird und damit zwei Enden aufweist.

Die beiden Enden des abgeschnittenen, den Gleitring 15 bildenden Bandmaterials 20 sind in der Figur 2 dargestellt.

Das Bandmaterial 20 besitzt eine Breite, die geringfügig kleiner ist als die Breite b der Umfangsnut 16. Weiterhin besitzt das Bandmaterial 20 eine Dicke d, die größer ist als die Tiefe t der Umfangsnut 16. Im eingelegten Zustand steht somit das Bandmaterial 20 über die Umfangsnut 16 und damit auch über die Umfangsfläche der Stange 14 über, wie dies auch in der Figur 1a dargestellt ist.

Das Bandmaterial 20 besitzt eine Länge, die so gewählt ist, dass, wenn das Bandmaterial 20 in die Umfangsnut 16 eingebracht ist, der nunmehr entstandene Gleitring 15 möglichst genau die Umfangslänge der Umfangsnut 16 besitzt.

Das Bandmaterial 20 besteht vorzugsweise aus einem Kunststoff. Beispielsweise kann das Bandmaterial 20 aus PTFE (PTFE = Polytetrafluorethylen) oder aus einem sogenannten Compound-Material bestehen.

Wie der Figur 2 zu entnehmen ist, weist das Bandmaterial 20 ein erstes Ende 21 und ein zweites Ende 22 auf. Die beiden Enden 21, 22 sind derart ausgebildet, dass sie ineinander greifen können. In diesem Zustand, in dem die beiden Enden 21, 22 miteinander verbunden sind, bildet das Bandmaterial 20 den Gleitring 15.

Das erste Ende 21 besitzt einen sich in Längsrichtung des Bandmaterials 20 erstreckenden Längssteg 24. Die Länge des Längsstegs 24 entspricht beispielhaft der Breite b des Bandmaterials 20. Die Breite und die Dicke des Längsstegs 24 sind kleiner als die Breite b und die Dicke d des Bandmaterials 20. Beispielhaft besitzt der Längssteg 24 die halbe Breite b und die halbe Dicke des Bandmaterials 20.

Weiterhin ist am ersten Ende 21 ein sich quer zur Längsrichtung des Bandmaterials 20 erstreckender Quersteg 25 vorhanden. Der Quersteg 25 ist am freien Ende des Längsstegs 24 angeordnet. Die Dicke des Querstegs 25 ist kleiner als die Dicke d des Bandmaterials 20. Beispielhaft entspricht die Dicke des Querstegs 25 der halben Dicke d. Quer zur Längsrichtung besitzt der Quersteg 25 eine Länge (der Begriff "Länge" bezieht sich hier auf den Quersteg 25 "für sich gesehen"), die der Breite d des Bandmaterials 20 entspricht. In Längsrichtung des Bandmaterials 20 besitzt der Quersteg 25 eine Breite (der Begriff "Breite" bezieht sich hier auf den Quersteg 25 "für sich gesehen"), die kleiner ist als die Breite b des Bandmaterials 20. Beispielhaft entspricht diese Breite der halben Breite b des Bandmaterials 20.

Ausgehend von dem Bandmaterial 20 ist der Längssteg 24 derart an das Bandmaterial 20 angesetzt, dass ein bündiger Übergang der Seitenflächen SF von dem Bandmaterial 20 zu dem Längssteg 24 vorhanden ist. Weiterhin ist der Längssteg 24 ausgehend von dem Bandmaterial 20 derart an das Bandmaterial 20 angesetzt, dass ein bündiger Übergang der Oberflächen OF von dem Bandmaterial 20 zu dem Längssteg 24 vorhanden ist. Im Hinblick auf diese Anordnung des Längsstegs 24 ist dann der Quersteg 25 derart mit dem Längssteg 24 verbunden, dass kein bündiger Oberflächenübergang, sondern eine Stufe 26 vorhanden ist. Die Stufe 26 besitzt im vorliegenden Beispiel eine Höhe, die der halben Dicke d des Bandmaterials 20 entspricht.

Aufgrund der Stufe 26 sind der Längssteg 24 und der Quersteg 25 nicht in derselben Ebene angeordnet, sondern in zwei zueinander versetzten Ebenen, wobei der genannte Versatz in Richtung der Dicke des Bandmaterials 20 vorhanden ist und die beiden versetzten Ebenen im vorliegenden Beispiel zusammen die Dicke d des Bandmaterials 20 bilden.

Aufgrund der zueinander quer verlaufenden Ausrichtung des Längsstegs 24 und des Querstegs 25 sowie aufgrund der Anordnung des Längsstegs 24 und des Querstegs 25 in zwei zueinander versetzten Ebenen ergibt sich eine Ausnehmung 27 in dem ersten Ende 21 des Bandmaterials 20, die sich parallel zu dem Quersteg 25 erstreckt. Die Ausnehmung weist im Wesentlichen dieselben Abmessungen wie der Quersteg 25 auf. In der Figur 2 ist diese Ausnehmung 27 teilweise unterhalb des Längsstegs 24 sowie in der Verlängerung davon erkennbar.

Das zweite Ende 22 des Bandmaterials 20 besitzt einen sich in Längsrichtung des Bandmaterials 20 erstreckenden Längssteg 29 sowie einen sich quer zur Längsrichtung des Bandmaterials 20 erstreckender Quersteg 30. Der Längssteg 29 und der Quersteg 30 des zweiten Endes 22 sind gleichartig ausgebildet wie der Längssteg 24 und der Quersteg 25 des ersten Endes 21 des Bandmaterials 20. Insbesondere ist bei dem zweiten Ende 22 eine entsprechende Stufe 31 sowie eine entsprechende Ausnehmung 32 vorhanden, wie dies auch bei dem ersten Ende 21 der Fall ist. Im Hinblick auf das zweite Ende 22 wird somit vollumfänglich auf die Erläuterungen des ersten Endes 21 des Bandmaterials 20 verwiesen.

Der Unterschied zwischen dem ersten Ende 21 und dem zweiten Ende 22 des Bandmaterials 20 besteht im Wesentlichen darin, dass bei dem Längssteg 29 des zweiten Endes 22 der bündige Übergang der Seitenflächen von dem Bandmaterial 20 zu dem Längssteg 29 nicht dieselbe Seitenfläche SF wie bei dem ersten Ende 21 betrifft, sondern dass dieser bündige Übergang bei dem zweiten Ende 22 an der anderen Seitenfläche SF' vorhanden ist.

Aufgrund der vorstehend erläuterten Ausgestaltung der beiden Enden 21, 22 ergibt sich, dass die beiden Enden 21, 22 ineinander greifen können. Wie dies auch in der Figur 2 angedeutet ist, greift dabei der Quersteg 25 des ersten Endes in die Ausnehmung 32 des zweiten Endes 22 ein und der Quersteg 30 des zweiten Endes 22 in die Ausnehmung 27 des ersten Endes 21. Der Längssteg 24 des ersten Endes 21 erstreckt sich dann über den Quersteg 30 des zweiten Endes 22 und der Längssteg 29 des zweiten Endes 22 erstreckt sich über den Quersteg 25 des ersten Endes 21.

Durch das Ineinandergreifen der beiden Enden 21, 22 des Bandmaterials 20 entsteht ein Formschluss zwischen den beiden Enden 21, 22. Insbesondere wirkt der Formschluss in Umfangsrichtung des Bandmaterials 20. Dies bedeutet, dass sich die beiden Enden 21, 22 des Bandmaterials 20 nicht ohne weiteres wieder voneinander lösen können. In diesem ineinandergreifenden Zustand bildet das Bandmaterial 20 dann den Gleitring 15.

Im Ausführungsbeispiel der Figur 2 wird der genannte Formschluss dadurch erreicht, dass die beiden Querstege 25, 30 in die jeweils zugehörigen Ausnehmungen 32, 27 eingreifen. Die beiden Querstege 25, 30 können sich damit in Umfangsrichtung des entstehenden Gleitrings 15 nicht mehr bewegen.

Nach einem Ineinandergreifen der beiden Enden 21, 22 des Bandmaterials 20 überlappen sich die Bereiche der beiden Längsstege 24, 29 und der beiden Querstege 25, 30 und bilden damit einen Überlappungsbereich 34. Nach dem Ineinandergreifen der beiden Enden 21, 22 des Bandmaterials 20 weist der entstehende Gleitring 15 somit eine um den Überlappungsbereich 34 geringere Umfangslänge auf im Vergleich zu der Länge des Bandmaterials 20 vor dem Ineinandergreifen der beiden Enden 21, 22.

Bei der Herstellung der Unterbrechereinheit des Hochspannungsleistungsschalters werden zuerst die erläuterten Längs- und Querstege 24, 25, 29, 30 des ersten und zweiten Endes 21, 22 des Bandmaterials 20 erstellt. Dies kann beispielsweise durch eine entsprechende schneidende Bearbeitung des Bandmaterials 20 erfolgen.

Dann wird beispielsweise das erste Ende 21 des Bandmaterials 20 in die Umfangsnut 16 der Stange 14 eingelegt. Dann wird das Bandmaterial 20 in Umfangsrichtung in die Umfangsnut 16 eingelegt, und zwar bis hin zum zweiten Ende 22 des Bandmaterials 20. Der Quersteg 30 des zweiten Endes 22 wird nunmehr von der Seite in die Ausnehmung 27 des in der Umfangsnut 16 befindlichen, ersten Endes 21 des Bandmaterials 20 eingesteckt. Hierzu muss das Bandmaterial 20 nicht oder nur in vernachlässigbarem Umfang gedehnt werden.

Nachdem der Quersteg 30 des zweiten Endes 22 vollständig in die Ausnehmung 27 des ersten Endes 21 eingeführt ist, kann der Quersteg 30 zusammen mit dem Längssteg 29 des zweiten Endes 22 nach unten in Richtung zu der Umfangsnut 16 gedrückt werden, so dass die beiden Querstege 25, 30 der beiden Enden 21, 22 nunmehr vollständig in die jeweils zugehörige Ausnehmung 32, 27 eingreifen. Die beiden Enden 21, 22 des Bandmaterials 20 greifen nunmehr formschlüssig ineinander ein. Das Bandmaterial 20 ist über seine beiden Enden 21, 22 nunmehr geschlossen und der Gleitring 15 ist damit fertiggestellt.

Wie erwähnt, bilden die beiden ineinandergreifenden Enden 21, 22 des entstandenen Gleitrings 15 eine formschlüssige Verbindung. Dies bringt den Vorteil mit sich, dass der Gleitring 15 fest innerhalb der Umfangsnut 16 angeordnet ist und nicht ohne weiteres wieder aus der Umfangsnut 16 herausrutschen kann. Weiterhin haben die ineinandergreifenden Enden 21, 22 zur Folge, dass kein durchgehender Spalt entsteht, sondern dass die Längs- und Querstege eine Art Spalt-Labyrinth bilden, was die dichtenden Eigenschaften des Gleitrings 15 im Hinblick auf ein Isoliergas erhöht.

Es wird darauf hingewiesen, dass die in der Figur 2 dargestellte Geometrie der beiden Enden 21, 22 des Bandmaterials 20 sowie die in der obigen Beschreibung angegebenen Größenverhältnisse insbesondere im Hinblick auf die Breite b oder die Dicke d des Bandmaterials 20 nur ein mögliches Ausführungsbeispiel darstellen. Es wird betont, dass die Geometrie auch andersartig ausgestaltet sein kann. Beispielsweise können die Längs- und Querstege auch gerundet oder kurvenförmig ausgebildet sein. Ebenfalls können die Längs- und Querstege auch kleinere oder größere Längen, Breiten und/oder Dicken aufweisen. Weiterhin müssen die beiden Enden 21, 22 auch nicht gleichartig ausgebildet sind, sondern können stattdessen Asymmetrien aufweisen. Insoweit müssen die Längs- und Querstege auch nicht zwingend "längs" oder "quer" angeordnet sein, sondern können schräg oder kurvenförmig ausgebildet sein. Ebenfalls kann es ausreichend sein, nur einen einzigen Quersteg vorzusehen, der dann in eine einzige Ausnehmung formschlüssig eingreift.

Ausdrücklich wird auch nochmals darauf hingewiesen, dass es sich bei der Stange 14 nicht zwingend um eine mit dem Tulpenkontakt der Unterbrechereinheit verbundene Stange handeln muss, sondern dass es sich um jegliche andere Stange oder, ganz allgemein, um jegliches anderes axial verschiebbares Bauteil, das mit einem anderen Bauteil gleitend verbunden werden soll, des elektrischen Hochspannungsleistungsschalters bzw. eines sonstigen elektrischen Hochspannungsschaltgeräts handeln kann. Beispielsweise kann es sich auch um eine mit dem Kontaktstift verbundene Stange handeln, wenn der Kontaktstift hin und her bewegt werden kann. Oder es kann sich auch um eine Stange einer Betätigungseinrichtung des Hochspannungsleistungsschalters bzw. eines Hochspannungsschaltgeräts handeln, mit der der Kontaktstift oder / und der Tulpenkontakt in die genannte Hin- und Herbewegung versetzt werden können.

## Patentansprüche

1. Elektrisches Hochspannungsschaltgerät mit einer etwa in Längsrichtung verschiebbaren Stange (14), die eine Umfangsnut (16) aufweist, in der ein Gleitring (15) vorhanden ist, **dadurch gekennzeichnet, dass** der Gleitring (15) aus einem Bandmaterial (20) besteht, das zwei Enden (21, 22) aufweist, wobei die beiden Enden (21, 22) ineinander greifen und einen Formschluss bilden.

2. Hochspannungsschaltgerät nach Anspruch 1, wobei die beiden Enden (21, 22) einen Formschluss in Umfangsrichtung des Gleitrings (15) bilden.

3. Hochspannungsschaltgerät nach einem der vorstehenden Ansprüche, wobei eines der beiden Enden (21, 22) einen Quersteg (25, 30) aufweist, der in eine zugehörige Ausnehmung (32, 27) des anderen Endes (22, 21) eingreift.

4. Hochspannungsschaltgerät nach Anspruch 3, wobei die Ausnehmung (32, 27) im Wesentlichen dieselben Abmessungen wie der Quersteg (25, 30) aufweist.

5. Hochspannungsschaltgerät nach einem der Ansprüche 3 oder 4, wobei der Quersteg (25, 30) über einen Längssteg (24, 29) mit dem Bandmaterial (20) verbunden ist.

6. Hochspannungsschaltgerät nach einem der vorstehenden Ansprüche, wobei jedes der beiden Enden (21, 22) einen Quersteg (25, 30) aufweist, die in jeweils eine zugehörige Ausnehmung (32, 27) des anderen Endes (22, 21) eingreifen.

7. Hochspannungsschaltgerät nach einem der Ansprüche 3 bis 6, wobei der/die Quersteg/e (25, 30) und der/die Längssteg/e (24, 29) etwa quer zueinander ausgerichtet sind.

8. Hochspannungsschaltgerät nach einem der Ansprüche 3 bis 7, wobei der/die Quersteg/e (25, 30) und der/die Längssteg/e (24, 29) in zwei zueinander versetzten Ebenen angeordnet sind und damit einen Versatz zueinander aufweisen.

9. Hochspannungsschaltgerät nach einem der vorstehenden Ansprüche, wobei das Bandmaterial (20) aus einem Kunststoff besteht, beispielsweise aus PTFE (PTFE = Polytetrafluorethylen) oder aus einem Compound-Material.

## Claims

1. An electrical high-voltage switching device having a rod (14) which is displaceable approximately in the longitudinal direction and has a circumferential groove (16) in which a sliding ring (15) is provided, **characterized in that** said sliding ring (15) consists of a strip material (20) having two ends (21, 22) which engage with each other and form a positive connection.

2. The high-voltage switching device according to claim 1, wherein the two ends (21, 22) form a positive connection in the circumferential direction of said sliding ring (15).

3. The high-voltage switching device according to one of the preceding claims, wherein one of the two ends (21, 22) includes a transverse web (25, 30) which engages with a corresponding recess (32, 27) of the other end (22, 21).

4. The high-voltage switching device according to claim 3, wherein said recess (32, 27) has substantially the same dimensions as said transverse web (25, 30).

5. The high-voltage switching device according to one of claims 3 or 4, wherein said transverse web (25, 30) is connected to said strip material (20) via a longitudinal web (24, 29).

6. The high-voltage switching device according to one of the preceding claims, wherein each of the two ends (21, 22) includes a transverse web (25, 30) which engages with a corresponding recess (32, 27) of the other end (22, 21), respectively.

7. The high-voltage switching device according to one of claims 3 to 6, wherein said transverse web(s) (25, 30) and said longitudinal web(s) (24, 29) are oriented approximately transversely to each other.

8. The high-voltage switching device according to one of claims 3 to 7, wherein said transverse web(s) (25, 30) and said longitudinal web(s) (24, 29) are arranged in two mutually offset planes and thus have an offset from one another.

9. The high-voltage switching device according to any one of the preceding claims, wherein said strip material (20) consists of a plastic, such as PTFE (PTFE = polytetrafluoroethylene), or a compound material.

## Revendications

1. Appareil de coupure à haute tension électrique ayant une tige (14) déplaçable dans une direction sensiblement longitudinale, qui présente une gorge circonférentielle (16), dans laquelle un anneau de glissement (15) est présent, **caractérisé en ce que** l'anneau de glissement (15) est constitué à partir d'un matériau en bande (20), qui présente deux extrémités (21, 22), dans lequel les deux extrémités (21, 22) viennent en prise l'une avec l'autre et forment un engagement positif.

2. Appareil de coupure à haute tension selon la revendication 1, dans lequel les deux extrémités (21, 22) forment un engagement positif dans la direction circonférentielle de l'anneau de glissement (15).

3. Appareil de coupure à haute tension selon l'une quelconque des revendications précédentes, dans lequel une première des deux extrémités (21, 22) comprend une rainure transversale (25, 30) qui vient en prise dans un évidement (32, 27) associé de l'autre extrémité (22, 21).

4. Appareil de coupure à haute tension selon la revendication 3, dans lequel l'évidement (32, 27) présente sensiblement les mêmes dimensions que la rainure transversale (25, 30).

5. Appareil de coupure à haute tension selon l'une des revendications 3 ou 4, dans lequel la rainure transversale (25, 30) est reliée au matériau en bande (20) par l'intermédiaire d'une rainure longitudinale (24, 29).

6. Appareil de coupure à haute tension selon l'une quelconque des revendications précédentes, dans lequel chacune des deux extrémités (21, 22) présente une rainure transversale (25, 30), qui viennent en prise chacune dans un évidement associé (32, 27) de l'autre extrémité (22, 21).

7. Appareil de coupure à haute tension selon l'une des revendications 3 à 6, dans lequel la/les rainure(s) transversale(s) (25, 30) et/ou la/les rainure(s) longitudinale(s) (24, 29) sont orientées sensiblement transversalement les unes par rapport aux autres.

8. Appareil de coupure à haute tension selon l'une des revendications 3 à 7, dans lequel la/les rainure(s) transversale(s) (25, 30) et/ou la/les rainure(s) longitudinale(s) (24, 29) sont agencées dans deux plans décalés les uns par rapport aux autres et comprennent ainsi un décalage l'un par rapport à l'autre.

9. Appareil de coupure à haute tension selon l'une quelconque des revendications précédentes, dans lequel le matériau en bande (20) est constitué d'une matière plastique, par exemple de PTFE (PTFE = polytétrafluoroéthylène) ou d'un matériau composite.
